# EUROPÄISCHE PATENTSCHRIFT

(11) **EP 3 069 133 B1**
(45) Veröffentlichungstag und Bekanntmachung des Hinweises auf die Patenterteilung: **13.06.2018**
(21) Anmeldenummer: 14777283.4
(22) Anmeldetag: 22.09.2014
(51) Int. Cl.: G01N 29/07, G01N 29/11, G01N 29/24, G01N 29/44, G01N 29/04, G01N 29/265, B22D 11/12, B22D 11/18

(54) **VERFAHREN UND VORRICHTUNG ZUR KONTAKTLOSEN ÜBERPRÜFUNG DER BESCHAFFENHEIT EINES METALLURGISCHEN GIESSPRODUKTES**
METHOD AND DEVICE FOR CONTACTLESS TESTING OF THE QUALITY OF A METALLURGICAL CASTING PRODUCT
PROCÉDÉ ET DISPOSITIF DE CONTRÔLE SANS CONTACT DE LA QUALITÉ D'UN PRODUIT MÉTALLURGIQUE COULÉ

(30) Priorität: 13.11.2013 DE 102013223083
(43) Veröffentlichungstag der Anmeldung: 21.09.2016
(73) Patentinhaber: SMS group GmbH, 40237 Düsseldorf (DE)
(72) Erfinder: GUSAROVA, Tamara, 41812 Erkelenz (DE); SCHULZE, Stephan, 40668 Meerbusch (DE)
(74) Vertreter: Kross, Ulrich
(86) Internationale Anmeldenummer: PCT/EP2014/070114
(87) Internationale Veröffentlichungsnummer: WO 2015/071018

(56) Entgegenhaltungen:
- EP-A1- 1 298 429
- WO-A1-91/17009
- JP-A- H10 197 502
- JP-A- 2004 205 382
- US-A- 4 338 822
- OZGU ET AL: "Continuous caster instrumentation: State-of-the-art review", CANADIAN METALLURGICAL QUARTERLY, PERGAMON, CA, vol. 35, no. 3, 1 July 1996 (1996-07-01), pages 199-223, XP027399508, ISSN: 0008-4433 [retrieved on 1996-07-01]

## Beschreibung

Die Erfindung bezieht sich auf ein Verfahren und eine Vorrichtung zur kontaktlosen Überprüfung der Beschaffenheit eines metallurgischen Gießprodukts in Form eines kontinuierlichen Strangs, der in einer Produktionslinie in einer Förder- bzw. Gießrichtung transportiert wird. Die vorliegende Erfindung betrifft weiterhin ein Verfahren zur Herstellung und Distribution eines metallurgischen Gießproduktes, nachdem dieses in der Produktionslinie kontaktlos überprüft worden ist.

Beim Gießen von Stahl kommt der Überprüfung bzw. Inspektion nach dem Gießvorgang eine große Bedeutung zu, nämlich zur Beurteilung, ob das Gießprodukt die gewünschten Qualitätsanforderungen erfüllt.

Die Inspektion von metallurgischen Gießprodukten kann "offline", d. h. außerhalb einer Produktionslinie und zumeist erst nach einer vollständigen Abkühlung nach ca. 2 bis 4 Tagen erfolgen und wird in der Regel manuell durchgeführt. Zu diesem Zeitpunkt ist ein Eingriff in die Prozessparameter des Gießprozesses nicht mehr möglich, wobei eine Nachbehandlung des Gießproduktes entsprechend aufwändig ist. Zur Durchführung einer manuellen Inspektion kann es notwendig sein, zuvor eine Oberflächenbearbeitung durchzuführen, um z.B. eine Zunderschicht zu entfernen.

Bei Durchführung einer manuellen Prüfung von Gießprodukten wird die Innenprüfung der Gießprodukte durch Abschneiden der Proben und Beizen (z. B. Makroätzung, Baumann-Abdruck) durchgeführt. Die Innenqualität der Gießprodukte wird dabei anhand der Aufnahme von den auf diese Weise sichtbar gemachten Innenfehlern bzw. Ungänzen bewertet. Hierbei wird die Annahme getroffen, dass die Innenqualität des untersuchten Querschnitts eines Gießproduktes die Qualität des ganzen Produktes repräsentiert.

Alternativ ist bei einer manuellen Überprüfung von Gießprodukten, nach Beendigung des Gießvorgangs und einer entsprechenden Abkühlung des Gießproduktes, auch der Einsatz von Ultraschalltechnik bekannt. Hierbei wird ein abgekühltes und bereits vereinzeltes Gießprodukt, z.B. eine Bramme, einer zerstörungsfreien Ultraschallprüfung unterzogen, um relativ große Defekte, Seigerungszonen, Lunker oder ähnliche Ungänzen nachzuweisen.

Im Stand der Technik ist auch ein Verfahren zur kontinuierlichen Inspektion eines metallurgischen Gießproduktes bekannt, z.B. aus WO 91/17009 A1. Bei diesem Verfahren kommt eine Laserquelle zur Erzeugung eines gepulsten Laserstrahls zum Einsatz, der auf den aus der Stranggießkokille herausgezogenen Strang eingestrahlt wird und in dem Strang in oder auf der Oberfläche eine akustische Welle erzeugt. Ferner sind Mittel vorgesehen, die die Wechselwirkung der akustischen Welle mit dem Strang detektieren und entsprechende Signale erzeugen.

Aus WO 2011/054903 A1 ist ein Verfahren zum Ermitteln von Eigenschaften von metallurgischen Gießprodukten in Form eines Gießstranges bekannt, wobei eine Laserquelle zur Erzeugung eines auf die Oberfläche des Gießstrangs gerichteten Laserstrahls und ein Messgerät zur Auswertung von Signalen, die von der Oberfläche des Gießstrangs reflektiert werden, eingesetzt werden. Hierbei gibt der reflektierte Laserstrahl Informationen aus dem Gießstrang wieder, die durch die Erzeugung eines Wirbelstroms gewonnen werden.

In der Produktionslinie ist auch der Einsatz von Ultraschalltechnik bekannt, nämlich zum Beispiel für gewalzte Gießprodukte. Hierbei werden metallurgische Produkte mit einer geringen Dicke einer Inspektion unterzogen, in der Regel am Ende der Produktionslinie nach dem Abkühlen des Produktes. Typischerweise wird Wasser als Koppelmittel für die Ultraschallprüfung eingesetzt, z. B. bei Temperaturbereichen unter 100 °C. Eine solche Technologie ist beispielsweise aus JP 570024846 A bekannt.

Im Stand der Technik ist der Einsatz der Ultraschalltechnik auch für vergossene metallurgische Produkte bekannt, die gegenüber den gewalzten Produkten eine gröbere Struktur und eine größere Dicke aufweisen. Hierdurch wird die Empfindlichkeit der Ultraschallprüfung maßgeblich gesenkt. Zusätzlich kann die Temperatur von gegossenen Produkten in der Produktionslinie bei über 1000 °C liegen. Aus diesem Grund wird bei einem z. B. aus JP 57106855 A bekannten Verfahren zur Erkennung von Fehlern in Stranggussstücken die Ultraschallprüfung jedoch erst nach dem Schneiden und Abkühlen des Produktes und mit einer Wasser-Ankopplung realisiert durchgeführt. Ein weiteres Beispiel für eine Ultraschallprüfung, auch bei hohen Temperaturen, ist aus US 4,470,304 bekannt, wobei heiße Stahlplatten auf einem Transportband mittels Ultraschall und unter Verwendung eines Ultraschall-Mediums zum Einkoppeln des Ultraschalls und Kühlen der heißen Stahlplatten überprüft werden.

Eine koppelmittelfreie Ultraschallprüfung von Werkstücken in einer Produktionslinie ist aus DE 21 18 595 bekannt. Hierbei kommen Ultraschall-Prüfwalzen zum Einsatz, die in Andruckberührung mit den zu überprüfenden Werkstücken stehen. Eine solche Ultraschall-Prüfwalzenanordnung ermöglicht in einer Fertigungsstraße eine kontinuierliche Ultraschallprüfung bis zu einer Prozessgeschwindigkeit von 120 m/min. Jedoch setzt eine solche Ultraschallüberprüfung stets einen Kontakt zwischen den Prüfwalzen und dem Werkstück voraus, was insbesondere bei hohen Temperaturen problematisch ist.

Aus US 2007/102134 A1 ist eine kontaktlose Ultraschalltechnik für gegossene Produkte bekannt, jedoch lediglich zur Detektion der Position von Sumpfspitzen.

EP 1 298 429 A1 zeigt ein Verfahren zum Herstellen eines kontinuierlichen metallurgischen Gießprodukts, bei dem mittels einer kontaktlosen Überprüfung auf Basis der Ultraschalltechnik die Position einer Sumpfspitze innerhalb des Gießprodukts detektiert wird. Auf Grundlage eines empfangenen Ultraschall-Signals kann der Erstarrungsgrad des Gießprodukts und die Position der Sumpfspitze bestimmt werden.

JP H10 197502 offenbart ein Verfahren zur kontaktlosen Überprüfung der Beschaffenheit eines kontinuierlichen metallurgischen Gießprodukts, wobei die Überprüfung der Beschaffenheit des Gießprodukts auf Ultraschalltechnik basiert und auf Grundlage des Laufzeitunterschieds des Ultraschall-Signals innerhalb des Gießprodukts ein Rückschluss auf dessen Erstarrungsgrad möglich ist.

US 4 338 822 A zeigt eine Überprüfung der Beschaffenheit eines kontinuierlichen metallurgischen Gießprodukts auf Basis von Ultraschalltechnik, mittels der Defekte bzw. Innenfehler des Gießprodukts detektiert werden können.

JP 2004 205382 A zeigt eine Vorrichtung zur kontaktlosen Überprüfung der Beschaffenheit eines kontinuierlichen metallurgischen Gießprodukts auf Basis der Ultraschalltechnik. Indem ein Ultraschall-Signal durch das Gießprodukt hindurchgesendet wird, ist es möglich, den Erstarrungszustand des Gießprodukts zu detektieren.

In der Veröffentlichung von Ozgu et.al.: "Continuous caster instrumentation: State-ofthe-art-review", Canadian metallurgical quarterly, Pergamon, CA, Bd. 35, Nr. 3, 1. Juli 1996 (1996-07-01), Seiten 199-223, XP027399508, ISSN: 0008-4433, sind ein Verfahren nach dem Oberbegriff von Anspruch 1 und eine Vorrichtung nach dem Oberbegriff von Anspruch 7 genannt.

Der Erfindung liegt die Aufgabe zugrunde, eine Vorrichtung und ein Verfahren zur kontaktlosen Überprüfung der Beschaffenheit von kontinuierlichen metallurgischen Gießprodukten mit alternativen und insbesondere verschleißarmen Mitteln zu schaffen. Hierbei können auch die Prozessparameter des Gießprozesses optimiert werden.

Diese Aufgabe wird durch ein Verfahren mit den Merkmalen von Anspruch 1 und durch eine Vorrichtung mit den Merkmalen von Anspruch 7 gelöst. Des Weiteren wird diese Aufgabe durch eine Stranggießanlage gemäß Anspruch 13 gelöst. Vorteilhafte Weiterbildungen der Erfindung sind in den abhängigen Ansprüchen definiert.

Entsprechend ist bei einem Verfahren zur kontaktlosen Überprüfung der Beschaffenheit eines metallurgischen Gießprodukts in einer Produktionslinie vorgesehen, dass die Überprüfung dieses Gießprodukts auf Ultraschalltechnik basiert. In gleicher Weise ist bei einer entsprechenden Vorrichtung vorgesehen, dass diese Vorrichtung eine Ultraschalleinrichtung aufweist, mittels der die Beschaffenheit des Gießprodukts kontaktlos überprüft werden kann. Hierzu sind eine Auswerteeinrichtung, mittels der die mittels der Ultraschalltechnik-Überprüfung bestimmte Beschaffenheit des Gießproduktes analysiert werden kann, eine in Gießrichtung nach der Ultraschalleinrichtung angeordnete Markiervorrichtung, mittels der das Gießprodukt in Abhängigkeit einer durch die Ultraschalltechnik-Überprüfung detektierten Beschaffenheit markiert wird bzw. werden kann, und eine in Gießrichtung nach der Markiervorrichtung angeordnete Schneidvorrichtung vorgesehen, wobei die Schneidvorrichtung in Abhängigkeit der von der Auswerteeinrichtung analysierten Messergebnisse angesteuert wird bzw. ansteuerbar ist, wobei das Gießprodukt durch die Schneidvorrichtung vereinzelt wird bzw. vereinzelbar ist.

Der Erfindung liegt die wesentliche Erkenntnis zugrunde, dass die Überprüfung der Beschaffenheit von metallurgischen Gießprodukten mittels Ultraschalltechnik noch während des Gießprozesses selbst und somit z.B. an einem kontinuierlichen

Strang vor dessen Vereinzelung erfolgt, wobei die Ultraschalltechnik kontaktlos ist und keine Kontaktierung bzw. Kopplung zu dem heißen Strang erfordert. Hierdurch erfolgt eine Überprüfung des Gießprodukts nahezu verschleißfrei und ohne Koppelmittel, so dass Kosten für Verbrauchsmaterialien minimiert werden. Mittels dieser Ultraschalltechnik-Überprüfung lassen sich mögliche Innenfehler des Gießprodukts, insbesondere in Form von Lunkern, Seigerungern, Poren, Innenrissen, nichtmetallischen Einschlüssen oder dergleichen, und/oder mögliche Oberflächenfehler oder oberflächennahe Fehler des Gießprodukts und/oder auch dessen geometrische Abmessungen zuverlässig detektieren.

Es darf darauf hingewiesen werden, dass eine Produktionslinie im Sinne der vorliegenden Erfindung allgemein dahingehend zu verstehen ist, dass dabei ein kontinuierliches Gießprodukt in einer Richtung bewegt bzw. transportiert wird. Eine Produktionslinie im Sinne der vorliegenden Erfindung kann z.B. eine Bandgießanlage oder eine Walzanlage sein, ohne dass darin eine Einschränkung zu sehen ist. Jedenfalls besteht ein wesentlicher Aspekt der vorliegenden Erfindung darin, dass die kontaktlose Überprüfung des Gießproduktes mittels der Ultraschalltechnik "inline" erfolgt, wodurch auch eine Rückkopplung der Messergebnisse an die Prozessparamter einer solchen Anlage möglich ist.

In vorteilhafter Weiterbildung der Erfindung ist die Ultraschalleinrichtung derart bezüglich der Produktionslinie angeordnet, dass mittels der Ultraschalltechnik-Überprüfung zumindest ein Geometrieparameter des Gießprodukts bestimmt wird, zum Beispiel eine Dicke und/oder eine Breite des Gießprodukts. Im Sinne der vorliegenden Erfindung darf darauf hingewiesen werden, dass die geometrischen Abmessungen des Gießprodukts, z. B. dessen Dicke und/oder dessen Breite, ebenfalls als Beschaffenheit des Gießprodukts zu verstehen sind. Entsprechend ist eine Überwachung der Abmessungen des Gießprodukts in der Produktionslinie mittels der Ultraschalltechnik möglich.

Zweckmäßigerweise ist an die Auswerteeinrichtung eine grafische Ausgabeeinheit, z. B. ein Monitor oder dergleichen, angeschlossen, um die von der Auswerteeinrichtung analysierte Beschaffenheit des Gießprodukts grafisch darzustellen, z. B. eindimensional, zweidimensional oder auch dreidimensional.

Die Auswerteeinrichtung kann programmtechnisch eingerichtet sein, um folgende Operationen durchzuführen:
- Klassifizierung von detektierten Innenfehlern des Gießprodukts nach Art des Defekts (z. B. Lunker, Seigerungen, Poren, nichtmetallische Einschlüsse, etc.);
- Bestimmung der geometrischen Positionen solcher Innenfehler und deren Verteilung in dem Gießprodukt, bezüglich dessen Länge in Förderrichtung und/oder dessen Breite;
- Quantifizierung und/oder Qualifizierung der detektierten Innenfehler, beispielsweise durch Messung einer Ultraschalldämpfung und/oder einer Ultraschallgeschwindigkeit, vorzugsweise auch vollautomatisch;
- statistische Auswertung von detektierten Innenfehlern, nämlich zumindest in Bezug auf Häufigkeit, Dichte und/oder Verteilung der Defekte in dem Gießprodukt;
- Klassifizierung von detektierten Innenfehlern, insbesondere unter Berücksichtigung der Defektgröße, vorzugsweise auch vollautomatisch;
- Qualitätsbewertung auf Grundlage von detektierten Innenfehlern des Gießprodukts, und Zuordnung des Gießprodukts zu vorbestimmten Qualitätsklassen und/oder Qualitätsgruppen, vorzugsweise auch vollautomatisch.

In vorteilhafter Weiterbildung der Erfindung erfolgt die Überprüfung des Gießprodukts mittels der Ultraschalltechnik in der Produktionslinie in einem Bereich des Gießprodukts, der bereits vollständig durcherstarrt ist. Somit ist gewährleistet, dass die detektierte Beschaffenheit des Gießprodukts in der Produktionslinie mit jener Beschaffenheit vergleichbar ist, die das Gießprodukt auch nach einem Abkühlen aufweist.

In vorteilhafter Weiterbildung der Erfindung beruht die Ultraschalltechnik auf der Verwendung von EMAT ("Electro Magnetic Acoustic Transducer"), Laser-EMAT, Laserultraschall, Luftultraschall und/oder Luftultraschall-EMAT. Bei der Ultraschalltechnik gemäß EMAT können Sensoren unter Verwendung des Impuls-Echo-Verfahrens eingesetzt werden. Jedenfalls ist die für die vorliegende Erfindung eingesetzte Ultraschalltechnik kontaktlos. Dies wirkt sich positiv auf die Prozesssicherheit aus, indem die Gefahr einer Schädigung der Produktoberfläche (z. B. durch Reibung, lokale Kühlung, etc.) bzw. eine Prozessstörung (z. B. ein Verhaken von Teilen der Messeinrichtung durch Berührung mit dem Gießprodukt) ausgeschlossen ist.

In vorteilhafter Weiterbildung der Erfindung weist die Ultraschalleinrichtung eine Mehrzahl von Sensoren auf. Hierbei kann eine Mehrzahl von Sensoren zweckmäßigerweise derart in der Ultraschalleinrichtung angeordnet sein, dass damit eine vollständige Breite des Gießproduktes erfasst wird und entsprechend mittels der Ultraschalltechnik überprüft werden kann. Unter Berücksichtigung der Mehrzahl von Sensoren erfolgt die UltraschallÜberprüfung des Gießproduktes in einer oder vorzugsweise mehreren Messspuren.

Das Verfahren und die Vorrichtung gemäß der vorliegenden Erfindung eignen sich auch für einen Einsatz bei einer Stranggießanlage, die eine solche Steuervorrichtung für den Gießprozess aufweist, dass damit, unter Verwendung des Verfahrens bzw. der Vorrichtung nach der vorliegenden Erfindung, eine Anpassung von Prozessparametern der Stranggießanlage, z.B. Gießgeschwindigkeit, Abkühlgeschwindigkeit, Softreduction-Parameter, etc., in Abhängigkeit der durch die Ultraschalltechnik-Überprüfung detektierten Beschaffenheit des Gießprodukts möglich ist, indem die mit der Ultraschalleinrichtung verbundene Auswerteeinrichtung mit dieser Steuervorrichtung kommuniziert. In dieser Weise kann frühzeitig in den Gießprozess eingegriffen werden, auf Grundlage des Ergebnisses der Überprüfung mittels der Ultraschalltechnik. Somit werden zusätzliche Kenntnisse der Prozessführung gewonnen, die auch zur Verbesserung der Produktqualität des Gießprodukts ausgenutzt werden können.

In vorteilhafter Weiterbildung der Erfindung kann bei der vorstehend genannten Stranggießanlage eine Schneidvorrichtung vorgesehen sein, die in Förderrichtung nach bzw. hinter der Markiervorrichtung angeordnet ist. In Abhängigkeit der durch die Ultraschalltechnik-Überprüfung detektierten Beschaffenheit des Gießprodukts und/oder nach Vorgabe einer vorbestimmten Länge kann das Gießprodukt durch die Schneidvorrichtung geschnitten bzw. durchtrennt werden, wodurch der kontinuierliche Strang in der Produktionslinie zu Platten bzw. Brammen vereinzelt wird. Hierdurch können fehlerhafte Abschnitte des Gießprodukts aus dem Strang herausgeschnitten werden, um zu gewährleisten, dass für eine weitere Bearbeitung bzw. für eine Auslieferung an den Kunden ausschließlich Gießprodukte, die entweder fehlerfrei sind oder eine hinreichend gute Qualität aufweisen, Verwendung finden. In diesem Zusammenhang darf auch auf den Vorteil verwiesen werden, dass nach einem Durchtrennen des Strangs dessen daraus erzeugte i.O.-Teile ohne eine weitere Zwischenlagerung und/oder ohne eine weitere Qualitätsprüfung unmittelbar auf Transportmittel, z. B. Paletten, Lkws oder dergleichen, verladen werden können. Dies spart Kosten und Zeit.

Nachstehend sind Ausführungsbeispiele der Erfindung anhand von schematisch vereinfachten Zeichnungen näher beschrieben.

Es zeigen.
- Figur 1: eine schematisch vereinfachte Darstellung einer erfindungsgemäßen Vorrichtung zur kontaktlosen Überprüfung von kontinuierlichen Gießprodukten,
- Figur 2: eine schematisch vereinfachte Draufsicht auf einen Teilbereich der Vorrichtung von Figur 1,
- Figur 3: eine schematisch vereinfachte Draufsicht auf einen Teilbereich der Vorrichtung von Figur 1 nach einer weiteren Ausführungsform, und
- Figur 4: ein Prinzipdiagramm, zur Veranschaulichung einer Wechselwirkung der erfindungsgemäßen Vorrichtung mit anderen Größen bzw. Einrichtungen.

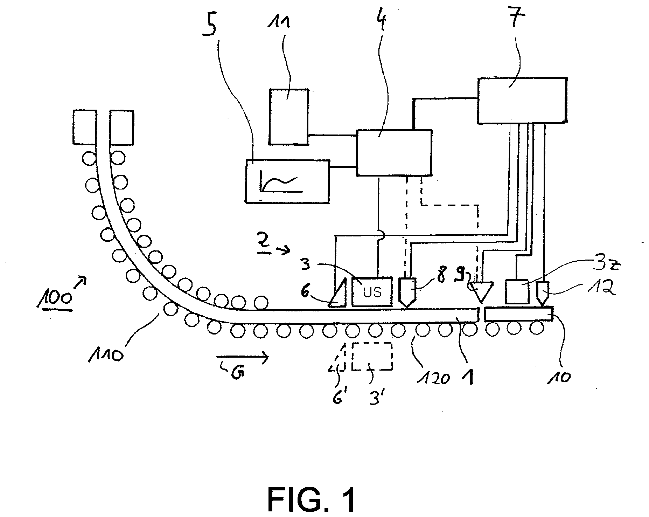

In Fig. 1 ist ein Gießprodukt in Form eines kontinuierlichen Stranges 1 gezeigt. Der Strang 1 wird in einer Stranggießanlage 100 in deren Gießbogen 110 gegossen, und hierbei in dem Gießbogen 110 und dem daran angrenzenden Rollgang 120 in einer Gießrichtung G transportiert. Der kontinuierliche Strang 1 wird, nachdem er den Gießbogen 110 verlassen hat, im noch heißen Zustand auf seine Beschaffenheit hin überprüft. Hierzu umfasst eine erfindungsgemäße Vorrichtung 2 eine Ultraschalleinrichtung 3, mittels der die Beschaffenheit des Gießprodukts 1 kontaktlos überprüft wird.

Die Ultraschalleinrichtung 3 ist oberhalb des Strangs 1 an einer (nicht gezeigten) geeigneten Halterung angebracht. Hierbei ist der Abstand der Ultraschalleinrichtung 3 bezüglich des Strangs 1 einerseits so gewählt, dass eine Überprüfung des Strangs mittels Ultraschall ohne die Verwendung von Koppelmitteln möglich ist, und andererseits so ausreichend groß gewählt, dass eine thermische Belastung der Ultraschalleinrichtung 3 wegen der hohen Temperatur des Strangs 1 nicht unzulässig groß wird.

Die Vorrichtung 2 umfasst eine Auswerteeinrichtung 4, die mit der Ultraschalleinrichtung 3 verbunden ist. Mittels der Auswerteeinrichtung 4 werden die von der Ultraschalleinrichtung 3 detektierte Beschaffenheit des Strangs 1 bzw. die Messsignale der Ultraschalleinrichtung 3 analysiert. An die Auswerteeinrichtung 4 ist ein Monitor 5 angeschlossen, mit dem die Beschaffenheit des Gießprodukts grafisch dargestellt werden kann.

In Gießrichtung G gesehen vor der Ultraschalleinrichtung 3 ist eine Reinigungseinrichtung 6 angeordnet. Mit dieser Reinigungseinrichtung 6 kann der Strang 1 einer Oberflächenvorbereitung unterzogen werden, beispielsweise durch eine Entzunderung mit Wasser und/oder Pressluft, durch ein Abbürsten der Oberfläche des Strangs 1 oder vergleichbare Maßnahmen. Eine solche Oberflächenvorbereitung des Strangs 1 verbessert die Messgenauigkeit durch die Ultraschalleinrichtung 3.

Die Vorrichtung 2 eignet sich zur Verwendung mit der Stranggießanlage 100. Hierbei kann die Auswerteeinrichtung 4 mit einer Steuervorrichtung 7 der Stranggießanlage 110 kommunizieren.

Die Ultraschalleinrichtung 3 und die Reinigungseinrichtung 6 können an einer Oberseite des Strangs 1 angeordnet sein, wie in der Seitenansicht Fig. 1 durch Volllinien dargestellt. Alternativ hierzu können die Ultraschalleinrichtung und die Reinigungseinrichtung auch an einer Unterseite des Strangs 1 angeordnet sein, gemäß ihrer gestrichelten Darstellung in Fig. 1 und der dazu verwendeten Bezugszeichen 3'bzw. 6'. Weiter alternativ ist es möglich, dass die Ultraschalleinrichtung 3, 3' und die Reinigungseinrichtung 6, 6' sowohl an der Oberseite als auch an der Unterseite des Strangs 1 angeordnet sind, wodurch eine noch genauere Überprüfung des Strangs 1 gewährleistet ist.

In Gießrichtung G gesehen nach bzw. hinter der Ultraschalleinrichtung 3 ist eine Markiervorrichtung 8 angeordnet, mittels der der Strang 1 markiert werden kann. Dieses Markieren kann optisch erfolgen, zum Beispiel durch Aufbringen von Farbe. Die Markiervorrichtung 8 kann entweder an die Steuervorrichtung 7 (Volllinie, gemäß Darstellung in Fig. 1) oder direkt an die Auswerteeinrichtung 4 (gestrichelte Linie, gemäß Darstellung in Fig. 1) angeschlossen sein, und in Abhängigkeit von der durch die Ultraschalleinrichtung 2 detektierten Beschaffenheit des Strangs angesteuert werden.

In Gießrichtung G gesehen nach bzw. hinter der Markiervorrichtung 8 ist eine Schneidvorrichtung 9 angeordnet, mittels der der Strang 1 geschnitten bzw. durchtrennt werden kann. In gleicher Weise wie die Markiervorrichtung 8 kann die Schneidvorrichtung 9 entweder an die Steuervorrichtung 7 (Volllinie, vgl. Fig. 1) oder direkt an die Auswerteeinrichtung 4 (gestrichelte Linie, vgl. Fig. 1) angeschlossen sein. Durch das Schneiden wird der Strang 1 zu jeweiligen Brammen 10 vereinzelt.

An die Auswerteeinrichtung 4 kann eine Datenbank 11 angeschlossen sein, in der Messergebnisse bezüglich der analysierten Beschaffenheit des Strangs 1 gespeichert werden.

Die Erfindung funktioniert nun wie folgt:
Nachdem der Strang 1 den Gießbogen 110 verlassen hat, wird durch die Ultraschalleinrichtung 3 eine Beschaffenheit des kontinuierlichen Strangs 1 in der Produktionslinie der Stranggießanlage 110 kontaktlos überprüft. Sofern der Strang 1 Innenfehler bzw. Ungänzen aufweisen sollte, z. B. in Form von Lunkern, Poren, Seigerungen, Innenrissen oder nichtmetallischen Einschlüssen, so können diese durch die Ultraschalleinrichtung 3 mittels der Ultraschalltechnik-Überprüfung detektiert werden. Mit der Auswerteeinrichtung 4 ist eine anschließende Analyse der detektierten Innenfehler möglich, wobei eine grafische Darstellung mit dem Monitor 5 erfolgt.

Zu der Beschaffenheit des Strangs 1, die durch die Ultraschalleinrichtung 3 detektiert werden kann, gehören auch Oberflächenfehler und/oder oberflächennahe Fehler des Strangs 1, sowie geometrische Abmessungen des Strangs 1, z.B. dessen Breite und/oder Dicke. Dies ist durch eine entsprechende Beabstandung der Ultraschalleinrichtung 3 von dem Strang 1 gewährleistet.

Die Ultraschalleinrichtung 3 kann an ihrer Halterung ortsfest installiert sein, so dass sich eine Position der Ultraschalleinrichtung 3 relativ zur Produktionslinie nicht ändert. Alternativ ist es auch möglich, die Ultraschalleinrichtung 3 oder die damit verbundene Halterung parallel zur Gießrichtung G, und/oder quer zur Gießrichtung G zu bewegen.

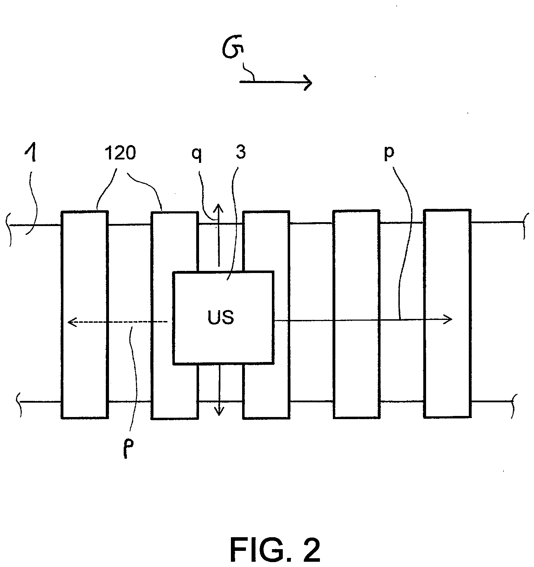

Fig. 2 zeigt eine schematisch vereinfachte Draufsicht auf die Ultraschalleinrichtung 3 und einen Teil des Rollgangs 120 als Beispiel. Durch die Pfeile p, q ist kenntlich gemacht, dass die Ultraschalleinrichtung 3 parallel bzw. quer zur Gießrichtung G bewegt werden kann. Ein solches Bewegen der Ultraschalleinrichtung 3 kann in Abhängigkeit von deren Messwerte bzw. der detektierten Beschaffenheit des Strangs 1 erfolgen, z.B. um eine Beschaffenheit des kontinuierlich bewegten Strangs 1 näher zu untersuchen bzw. die Beschaffenheit eines bestimmten Segments des Strangs 1 zu verifizieren.

Bei Bedarf kann die Bewegung der Ultraschalleinrichtung 3 in Richtung des Pfeils p mit gleicher Geschwindigkeit wie die Transportgeschwindigkeit des Strangs 1 in der Gießrichtung G erfolgen, so dass die Ultraschalleinrichtung 3 synchron zum Strang 1 bzw. oberflächenstationär dazu bewegt wird. Während dieser Bewegung der Ultraschalleinrichtung 3 wird die Beschaffenheit des Strangs 1 überprüft, wobei nach Abschluss dieser Überprüfung die Ultraschalleinrichtung 3 wieder entgegen der Gießrichtung G in ihre Ausgangsposition zurückbewegt wird (gestrichelter Pfeil p in Fig. 2).

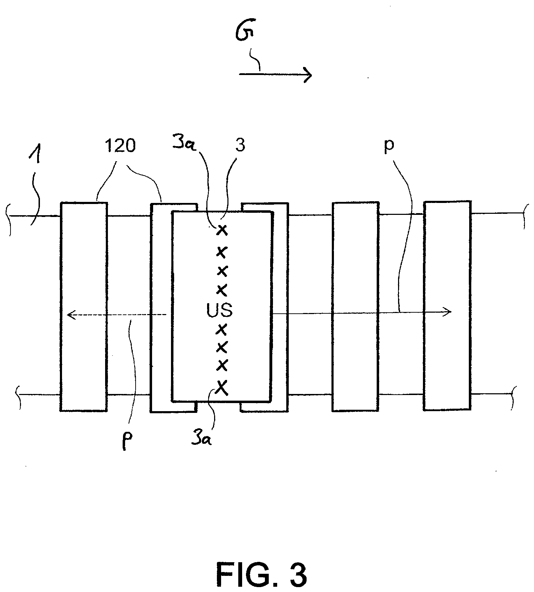

Fig. 3 zeigt eine schematisch vereinfachte Draufsicht auf die Ultraschalleinrichtung 3 nach einer alternativen Ausführungsform. Im Unterschied zu Fig. 2 ist die Ultraschalleinrichtung 3 gemäß Fig. 3 in ihrer Breite größer gewählt, wobei die Breite der Ultraschalleinrichtung 3 in Abstimmung mit der Gießbreite des Strangs 1 bzw. geringfügig größer als dessen Gießbreite gewählt ist. Somit kann durch die Ultraschalleinrichtung 3 eine fortwährende Überprüfung des Strangs 1 über seine gesamte Breite erfolgen, ohne dass dabei die Ultraschalleinrichtung 3 in einer Richtung quer zur Gießrichtung G bewegt wird. Zweckmäßigerweise sind in der Ultraschalleinrichtung 3 eine Mehrzahl von Sensoren 3a vorgesehen (in Fig. 3 durch vereinfacht "x" angedeutet), mit denen eine Ultraschallüberprüfung des Strangs in mehreren Messpuren erfolgt. Je höher die Anzahl von Sensoren 3a bzw. deren Dichte, desto genauer erfolgt eine Überprüfung des Strangs 1. Dies gilt in gleicher Weise auch für die Ultraschalleinrichtung 3 gemäß Fig. 1.

Die Markiervorrichtung 8 als auch die Schneidvorrichtung 9 können in Abhängigkeit der von der Auswerteeinrichtung 4 analysierten Messergebnisse der Ultraschalleinrichtung 3 angesteuert werden. Beispielsweise ist eine Markierung des Strangs 1 durch die Markiervorrichtung 8 in einem Abschnitt bzw. Segment des Strangs 1 möglich, in dem von der Ultraschalleinrichtung 3 ein unzulässiger Defekt oder dergleichen detektiert worden ist. Dieses fehlerhafte Segment kann durch die Schneidvorrichtung 9 aus dem Strang 1 herausgeschnitten werden, wonach es als Schrott aus der Produktion aussortiert wird. Hierbei werden aus dem Strang 1 stets nur solche Segmente herausgeschnitten und sodann aussortiert, in denen Defekte oder dergleichen detektiert worden sind. Hierdurch ist gewährleistet, dass die übrigen "guten" Bereiche des Strangs 1, die den gewünschten Qualitätsanforderungen genügen, weiter verarbeitet, auf eine gewünschte Länge geschnitten und anschließend weitertransportiert werden. Im Vergleich zu herkömmlichen Stranggießanlagen, bei denen in der Regel eine Pauschallänge vom Kopf bzw. Ende des Stranges 1 abgeschnitten wird, ist durch die Erfindung eine optimierte Materialausbeute bezüglich des Stranges 1 gewährleistet, verbunden mit weniger Ausschuss und einem reduzierten Verschrottungsvolumen.

Auf Grundlage von detektierten Defekten des Strangs 1, z.B. unter Berücksichtigung von deren Anzahl, Größe und/oder Verteilungsbild in dem Strang 1, kann durch die Auswerteeinrichtung 3 eine Zuordnung des Strangs 1 zu vorbestimmten Qualitätsklassen vorgenommen werden, ggf. auch unter Verwendung von entsprechenden Regeln, internen Qualitätsstandards und/oder Kundenspezifikationen.

Mit der Markiervorrichtung 8 ist es ebenfalls möglich, bestimmte Segmente des Strangs 1, die aufgrund der detektierten Beschaffenheit in eine vorbestimmte Qualitätsklasse fallen, entsprechend zu kennzeichnen. Hierzu können mittels der Markiervorrichtung 8 auf den Strang 1 entsprechend verschiedene Zeichen bzw. Bezeichnungen aufgebracht werden, was ein späteres Handling der Brammen 10, die dieser Qualitätsklasse angehören, vereinfacht.

Durch die erfindungsgemäße Stranggießanlage 100 ist es möglich, dass die auf eine vorbestimmte Länge geschnittenen Brammen 10 ohne weitere Zwischenlagerungen und/oder eine weitere Qualitätsbestimmung auf ein Transportmittel oder dergleichen verladen wird, z.B. für einen Transport an Kunden oder weitere Bearbeitungsstationen.

Nach einer weiteren Ausführungsform der erfindungsgemäßen Stranggießanlage 100 ist es möglich, die bereits vereinzelten Brammen 10 mittels einer zusätzlichen Ultraschalleinrichtung 3z nochmals zu überprüfen. Diese Überprüfung kann mit hoher Genauigkeit erfolgen, z.B. mittels einer hohen Anzahl von Sensoren innerhalb der zusätzlichen Ultraschalleinrichtung 3z, um z.B. ein Qualitätszertifikat für die jeweiligen Brammen 10 auszustellen. Mittels einer zweiten Markiervorrichtung 12 ist es möglich, die einzelnen Brammen 10 in Abhängigkeit der festgestellten Qualität entsprechend zu markieren.

Durch eine Kommunikation der Auswerteeinrichtung 4 mit der Steuervorrichtung 7 können verschiedene Prozessparameter der Stranggießanlage, z. B. Gießgeschwindigkeit, Abkühlgeschwindigkeit, Softreduction-Parameter oder dergleichen, in Abhängigkeit der analysierten Beschaffenheit des Stranges 1 gesteuert und/oder geregelt werden. Dies ermöglicht einen "online"-Eingriff in den Gießprozess, und gestattet eine frühzeitige Anpassung der Prozessparameter des Gießprozesses für eine Optimierung der Produktqualität. In diesem Zusammenhang lassen sich auch zusätzliche Kenntnisse bezüglich der Prozessführung der Stranggießanlage 100 gewinnen, bezüglich einer direkten Beeinflussung der Beschaffenheit des Stranges 1. Im Ergebnis können hierdurch die Produktionskosten infolge einer Optimierung der Prozessparameter wesentlich gesenkt werden.

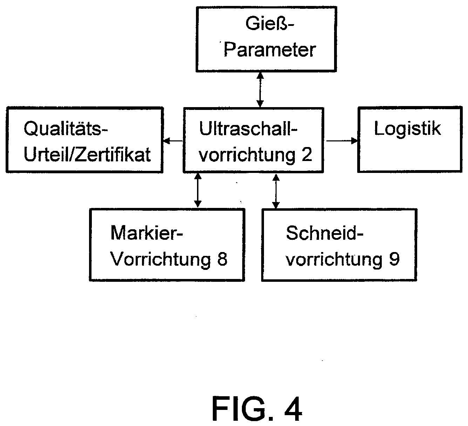

Fig. 4 zeigt ein schematisches Diagramm bezüglich einer Anbindung der (Ultraschall-)Vorrichtung 2 an die Automation bzw. die Prozessführung in der Stranggießanlage 100. Die Doppelpfeile in Fig. 4 verdeutlichen sowohl die mögliche Ansteuerung der Markiervorrichtung 8 und der Schneidvorrichtung 9 in Abhängigkeit der Messdaten der Ultraschalleinrichtung 3 bzw. der daran angeschlossene Auswerteeinrichtung 4, als auch die Rückführung dieser Messdaten an die Steuervorrichtung 7, zur Steuerung/Regelung der Gießparameter. Des Weiteren beeinflusst die Überprüfung des Strangs 1 mittels der Ultraschalleinrichtung 3 die Qualitätseinstufung des produzierten Stranges 1 bzw. der hieraus hergestellten Brammen 10 als auch die nachfolgende Logistik dieser Produkte. Wie bereits erläutert, ist eine Ansteuerung der Markiervorrichtung 8 in Abhängigkeit von der Ultraschalleinrichtung 3 möglich, zwecks einer entsprechenden Kennzeichnung des Strangs 1, z. B. im Hinblick auf die festgestellte Qualitätsgüte oder zur Kennzeichnung als Ausschuss, sofern die Qualitätskriterien nicht erfüllt werden.

### Bezugszeichenliste

- 1: Gießprodukt / Strang
- 2: Vorrichtung zur kontaktlosen Überprüfung des Strangs 1
- 3: Ultraschalleinrichtung
- 3a: Sensor
- 3z: zusätzliche Ultraschalleinrichtung
- 4: Auswerteeinrichtung
- 5: Monitor
- 6: Reinigungseinrichtung
- 7: Steuervorrichtung
- 8: Markiervorrichtung
- 9: Schneidvorrichtung
- 10: Brammen
- 11: Datenbank
- 12: zweite Markiervorrichtung
- 100: Stranggießanlage
- 110: Gießbogen
- 120: Rollgang

## Patentansprüche

1. Verfahren zur kontaktlosen Überprüfung der Beschaffenheit eines kontinuierlichen metallurgischen Gießproduktes (1) in einer Produktionslinie,
wobei die Überprüfung des Gießproduktes (1) auf Ultraschalltechnik basiert und mittels der Ultraschalltechnik-Überprüfung mögliche Innenfehler des Gießproduktes (1), insbesondere in Form von Lunkern, Poren, Seigerungen, Innenrissen oder nichtmetallischen Einschlüssen, detektiert werden,
wobei die mittels der Ultraschalltechnik-Überprüfung bestimmte Beschaffenheit des Gießproduktes (1) mittels einer Auswerteeinrichtung (4) analysiert wird, **dadurch gekennzeichnet,**
**dass** eine in Gießrichtung (G) nach der Ultraschalleinrichtung (3) angeordnete Markiervorrichtung (8) vorgesehen ist, mittels der das Gießprodukt (1) in Abhängigkeit einer durch die Ultraschalltechnik-Überprüfung detektierten Beschaffenheit markiert wird, und
**dass** das Gießprodukt (1) durch eine in Gießrichtung nach der Markiervorrichtung (8) angeordnete Schneidvorrichtung (9) vereinzelt wird, die in Abhängigkeit der von der Auswerteeinrichtung (4) analysierten Messergebnisse angesteuert wird, wobei die Beschaffenheit von vereinzelten Stücken (10) des Gießproduktes (1) mittels einer zusätzlichen Ultraschalleinrichtung (3z) überprüft wird, vorzugsweise, dass die vereinzelten Stücke (10) des Gießproduktes in Abhängigkeit der Überprüfung mittels der zusätzlichen Ultraschalleinrichtung (3z) durch eine zweite Markiereinrichtung (12) markiert werden.

2. Verfahren nach Anspruch 1, **dadurch gekennzeichnet, dass** mittels der Ultraschalltechnik-Überprüfung mögliche Oberflächenfehler und/oder oberflächennahe Fehler des Gießproduktes (1) detektiert werden.

3. Verfahren nach Anspruch 1 oder 2, **dadurch gekennzeichnet, dass** die Auswerteeinrichtung (4) programmtechnisch derart eingerichtet ist, dass detektierte Innenfehler des Gießproduktes (1) nach Art des Defektes, z.B. Lunker, Seigerungen, Poren, nichtmetallischer Einschluss o. dgl., klassifiziert bestimmt werden.

4. Verfahren nach einem der Ansprüche 1 bis 3, **dadurch gekennzeichnet, dass** die detektierten Innenfehler zusätzlich durch die Auswerteeinrichtung (4) quantifiziert und/oder qualifiziert werden, indem die gemessene Ultraschalldämpfung und/oder Ultraschallgeschwindigkeit berücksichtigt wird, vorzugsweise, dass die Quantifizierung und/oder Qualifizierung der detektierten Innenfehler vollautomatisch erfolgt.

5. Verfahren nach einem der Ansprüche 1 bis 4, **dadurch gekennzeichnet, dass** auf Grundlage der Daten der Auswerteeinrichtung (4) für das Gießprodukt (1) vollautomatisch eine Qualitätsbewertung durchgeführt wird, indem das Gießprodukt (1) zu vorbestimmten Qualitätsklassen bzw. -gruppen zugeordnet wird.

6. Verfahren nach einem der Ansprüche 1 bis 5, **dadurch gekennzeichnet, dass** die Ultraschalltechnik auf der Verwendung von EMAT, Laser-EMAT, Laserultraschall, Luftultraschall und/oder Luftultraschall-EMAT beruht.

7. Vorrichtung (2) zur kontaktlosen Überprüfung der Beschaffenheit eines kontinuierlichen metallurgischen Gießproduktes (1) in einer Produktionslinie,
wobei die Vorrichtung (2) eine Ultraschalleinrichtung (3) aufweist, mittels der die Beschaffenheit des Gießproduktes (1) kontaktlos überprüfbar ist, wobei mittels der Ultraschalltechnik-Überprüfung mögliche Innenfehler des Gießproduktes (1), insbesondere in Form von Lunkern, Poren, Seigerungen, Innenrissen oder nichtmetallischen Einschlüssen detektierbar sind,
wobei eine Auswerteeinrichtung (4) vorgesehen ist, die mit der Ultraschalleinrichtung (3) kommuniziert und mittels der die mittels der Ultraschalltechnik-Überprüfung bestimmte Beschaffenheit des Gießproduktes (1) analysierbar ist, **dadurch gekennzeichnet,**
**dass** eine in Gießrichtung (G) nach der Ultraschalleinrichtung (3) angeordnete Markiervorrichtung (8) vorgesehen ist, mittels der das Gießprodukt (1) in Abhängigkeit einer durch die Ultraschalltechnik-Überprüfung detektierten Beschaffenheit markierbar ist, und
**dass** in Gießrichtung nach der Markiervorrichtung (8) eine Schneidvorrichtung (9) angeordnet ist, die in Abhängigkeit der von der Auswerteeinrichtung (4) analysierten Messergebnisse der Ultraschalleinrichtung (3) ansteuerbar ist, wobei das Gießprodukt (1) durch die Schneidvorrichtung (9) vereinzelbar ist, wobei die Vorrichtung eine zusätzliche Ultraschalleinrichtung (3z) aufweist, die eingerichtet ist, die Beschaffenheit von vereinzelten Stücken des Gießproduktes zu überprüfen, und vorzugsweise, dass die Vorrichtung eine zweite Markiereinrichtung (12) aufweist, die eingerichtet ist, die vereinzelten Stücke (10) des Gießproduktes (1) in Abhängigkeit der Überprüfung mittels der zusätzlichen Ultraschalleinrichtung (3z) zu markieren.

8. Vorrichtung (2) nach Anspruch 7, **dadurch gekennzeichnet, dass** ein Monitor (5) vorgesehen ist, mittels dessen die von der Auswerteeinrichtung (4) analysierte Beschaffenheit des Gießproduktes (1) graphisch darstellbar ist, vorzugsweise, dass diese graphische Darstellung eindimensional, zweidimensional und/oder dreidimensional erfolgt.

9. Vorrichtung (2) nach Anspruch 7 oder 8, **dadurch gekennzeichnet, dass** die Ultraschalleinrichtung (3) quer und/oder parallel zu einer Gießrichtung (G) des Gießproduktes (1) bewegbar ist, vorzugsweise, dass die Ultraschalleinrichtung (3) in Abhängigkeit einer durch die Ultraschalltechnik-Überprüfung detektierten Beschaffenheit des Gießproduktes (1) bewegbar ist, weiter vorzugsweise, dass die Ultraschalleinrichtung (3) parallel zur Gießrichtung (G) oberflächenstationär zum Strang (1) bewegbar ist.

10. Vorrichtung (2) nach einem der Ansprüche 7 bis 9, **dadurch gekennzeichnet, dass** die Ultraschalleinrichtung (3) mehrere Ultraschallsensoren (3a) aufweist, wobei die Ultraschalltechnik-Überprüfung in einer Messspur oder mehreren Messspuren erfolgt.

11. Vorrichtung (2) nach einem der Ansprüche 7 bis 10, **dadurch gekennzeichnet, dass** die Ultraschalltechnik der Ultraschalleinrichtung (3) auf der Verwendung von EMAT, Laser-EMAT, Laserultraschall, Luftultraschall und/oder Luftultraschall-EMAT beruht.

12. Vorrichtung (2) nach einem der Ansprüche 7 bis 11, **dadurch gekennzeichnet, dass** die Ultraschalleinrichtung (3) oberhalb des Gießproduktes (1), unterhalb des Gießproduktes (1) oder beiderseits des Gießproduktes (1) angeordnet ist.

13. Stranggießanlage (100), umfassend
eine Vorrichtung (2) nach einem der Ansprüche 7 bis 12 zur Durchführung eines Verfahrens nach einem der Ansprüche 1 bis 6, und
eine Steuervorrichtung (7) für den Gießprozess,
wobei Prozessparameter der Stranggießanlage (100), insbesondere Gießgeschwindigkeit, Abkühlgeschwindigkeit, SoftReduction-Parameter o.dgl., in Abhängigkeit der durch die Ultraschalltechnik-Überprüfung detektierten Beschaffenheit des Gießproduktes (1) steuerbar und/oder regelbar sind, indem die mit der Ultraschalleinrichtung (3) verbundene Auswerteeinrichtung (4) mit der Steuervorrichtung (7) kommuniziert.

14. Stranggießanlage (100) nach Anspruch 13, **dadurch gekennzeichnet, dass** mittels der in der Gießrichtung (G) nach der Markiervorrichtung (8) angeordneten Schneidvorrichtung (9) das Gießprodukt (1) entweder in Abhängigkeit seiner durch die Ultraschalltechnik-Überprüfung detektierten Beschaffenheit oder nach Vorgabe einer vorbestimmten Länge durchtrennbar ist.

## Claims

1. Method for contactless checking of the character of a metallurgical cast product 91) in a production line,
wherein the checking of the cast product (1) is based on ultrasonic technology and possible internal faults of the cast product (1) particularly in the form of shrink holes, pores, segregations, internal cracks or non-metallic inclusions are detected by means of the check by ultrasonic technology and
wherein the character of the cast product (1) determined by means of the check by ultrasonic technology is analysed by way of an evaluating device (4),
**characterised in that**
a marking device (8) which is arranged after the ultrasonic device (3) in casting direction (G) and by means of which the cast product (1) is marked in dependence on character detected by the check by ultrasonic technology is provided and
the cast product (1) is divided up by a cutting device (9) which is arranged after the marking device (8) in casting direction and which is activated in dependence on the measurement results analysed by the evaluating device (4), wherein the character of separated pieces (10) of the cast product (1) is checked by means of an additional ultrasonic device (3z), preferably **in that** the separated pieces (10) of the cast product are marked by a second marking device (12) in dependence on the check by means of the additional ultrasonic device (3z).

2. Method according to claim 1, **characterised in that** possible surface faults and/or faults, which are near the surface, of the cast product (1) are detected by means of the check by ultrasonic technology.

3. Method according to claim 1 or 2, **characterised in that** the evaluating device (4) is so programmed that detected internal faults of the cast product (1) are determined with classification according to the kind of defect, for example shrink holes, segregations, pores, non-metallic inclusions or the like.

4. Method according to any one of claims 1 to 3, **characterised in that** the detected internal faults are additionally quantified and/or qualified by the evaluating device (4) **in that** the measured ultrasonic attenuation and/or ultrasonic velocity is or are taken into consideration, preferably **in that** the quantification and/or qualification of the detected internal faults is or are carried out fully automatically.

5. Method according to any one of claims 1 to 4, **characterised in that** a quality evaluation is carried out fully automatically on the basis of the data of the evaluating device (4) for the cast product (1) **in that** the cast product (1) is assigned to predetermined quality classes or quality groups.

6. Method according to any one of claims 1 to 5, **characterised in that** the ultrasonic technology is based on the use of EMAT, laser EMAT, laser ultrasound, air ultrasound and/or air ultrasound EMAT.

7. Device (2) for contactless checking of the character of a continuous metallurgical cast product (1) in a production line,
wherein the device (2) comprises an ultrasonic device (3) by means of which the character of the cast product (1) is contactlessly checkable, wherein possible internal faults of the cast product (1) particularly in the form of shrink holes, pores, segregations, internal cracks or non-metallic inclusions are detectable by means of the check by ultrasonic technology,
and
wherein an evaluating device (4) is provided, which communicates with the ultrasonic device (3) and by means of which the character, which is determined by means of the test by ultrasonic technology, of the cast product (1) can be analysed,
**characterised in that**
a marking device (8), which is arranged after the ultrasonic device (3) in casting direction (G) and by means of which the cast product (1) can be marked in dependence on character detected by the check by ultrasonic technology, is provided and
a cutting device (9), which can be activated in dependence on the measurement results - which are analysed by the evaluating device (4) - of the ultrasonic device (3), is arranged after the marking device (8) in casting direction, wherein the cast product (1) can be divided up by the cutting device (9), wherein the device comprises an additional ultrasonic device (3z) arranged to check the character of separated pieces of the cast product and preferably the device comprises a second marking device (12) arranged to mark the separated pieces (10) of the cast product (1) in dependence on the check by means of the additional ultrasonic device (3z).

8. Device (2) according to claim 7, **characterised in that** a monitor (5) is provided, by means of which the character, which is analysed by the evaluating device (4), of the cast product (1) can be graphically represented, preferably **in that** this graphical representation is carried out one-dimensionally, two-dimensionally and/or three-dimensionally.

9. Device (2) according to claim 7 or 8, **characterised in that** the ultrasonic device (3) is movable transversely and/or parallel to a casting direction (G) of the cast product (1), preferably **in that** the ultrasonic device (3) is movable in dependence on the character, which is detected by the check by ultrasonic technology, of the cast product (1), further preferably **in that** the ultrasonic device (3) is movable parallel to the casting direction (G) to be stationary relative to the surface with respect to the strand (1).

10. Device (2) according to any one of claims 7 to 9, **characterised in that** the ultrasonic device (3) comprises a plurality of ultrasonic sensors (3a), wherein the check by ultrasonic technology is carried out in one measuring track or several measuring tracks.

11. Device (2) according to any one of claims 7 to 10, **characterised in that** the ultrasonic technology of the ultrasonic device (3) is based on the use of EMAT, laser EMAT, laser ultrasound, air ultrasound and/or air ultrasound EMAT.

12. Device (2) according to any one of claims 7 to 11, **characterised in that** the ultrasonic device (3) is arranged above the cast product (1), below the cast product (1) or either side of the cast product (1).

13. Continuous casting plant (100) comprising
a device (2) according to any one of claims 7 to 12 for carrying out a method according to any one of claims 1 to 6 and
a control device (7) for the casting process,
wherein process parameters of the continuous casting plant (100), particularly casting speed, cooling speed, soft-reduction parameters or the like, are controllable and/or regulable in dependence on the character, which is detected by the check by ultrasonic technology, of the cast product (1) in that the evaluating device (4) connected with the ultrasonic device (3) communicates with the control device (7).

14. Continuous casting plant (100) according to claim 13, **characterised in that** by means of the cutting device (9), which is arranged after the marking device (8) in the casting direction (G), the cast product (1) can be parted either in dependence on its character detected by the check by ultrasonic technology or in accordance with a preset of a predetermined length.

## Revendications

1. Procédé pour la vérification sans contact des caractéristiques d'un produit métallurgique de coulée en continu (1) dans une ligne de production ; dans lequel la vérification du produit de coulée (1) se base sur une technique à ultrasons et, au moyen de la vérification par la technique à ultrasons, des défauts internes éventuels du produit de coulée (1), en particulier sous la forme de retassures, de pores, de ségrégations, de fissures internes ou d'inclusions non métalliques, sont détectés ; dans lequel les caractéristiques du produit de coulée (1) déterminées au moyen de la vérification par la technique à ultrasons sont analysées au moyen d'un mécanisme d'évaluation (4) ; **caractérisé en ce qu'**on prévoit un dispositif de marquage (8) disposé après le mécanisme à ultrasons (3) dans la direction de coulée (G), au moyen duquel le produit de coulée (1) est marqué en fonction d'une caractéristique détectée via la vérification par la technique à ultrasons, et **en ce que** le produit de coulée (1) est séparé via un dispositif de coupure (9) disposé après le dispositif de marquage (8) dans la direction de coulée, qui est commandé en fonction des résultats de mesure analysés par le mécanisme d'évaluation (4) ; dans lequel les caractéristiques de pièces séparées (10) du produit de coulée (1) sont vérifiées au moyen d'un mécanisme à ultrasons additionnel (3z) ; de préférence, **en ce que** les pièces séparées (10) du produit de coulée sont marquées via un deuxième mécanisme de marquage (12), en fonction de la vérification au moyen du mécanisme à ultrasons additionnel (3z).

2. Procédé selon la revendication 1, **caractérisé en ce que** des défauts superficiels éventuels et/ou des défauts éventuels proches de la surface du produit de coulée (1) sont détectés au moyen de la vérification par la technique à ultrasons.

3. Procédé selon la revendication 1 ou 2, **caractérisé en ce que** le mécanisme d'évaluation (4) est conçu sur base de moyens techniques programmés d'une manière telle que des défauts internes détectés du produit de coulée (1) sont déterminés de manière classifiée en fonction du type de défaut, par exemple des retassures, des ségrégations, des pores, des inclusions non métalliques, ou analogues.

4. Procédé selon l'une quelconque des revendications 1 à 3, **caractérisé en ce que** les défauts internes détectés sont en outre quantifiés et/ou qualifiés via le mécanisme d'évaluation (4), par le fait que l'on prend en compte l'atténuation ultrasonore mesurée et/ou la vitesse ultrasonore mesurée, de préférence **en ce que** la quantification et/ou la qualification des défauts internes détectés ont lieu de manière totalement automatisée.

5. Procédé selon l'une quelconque des revendications 1 à 4, **caractérisé en ce que**, sur la base des données du mécanisme d'évaluation (4) pour le produit de coulée (1), on met en oeuvre de manière totalement automatisée, une évaluation de la qualité en affectant le produit de coulée (1) à des classes, respectivement à des groupes de qualité prédéterminés.

6. Procédé selon l'une quelconque des revendications 1 à 5, **caractérisé en ce que** la technique à ultrasons s'appuie sur l'utilisation d'un EMAT, d'un laser-EMAT, d'un laser par ultrasons, d'ultrasons dans l'air et/ou d'ultrasons dans l'air-EMAT.

7. Dispositif (2) pour la vérification sans contact des caractéristiques d'un produit métallurgique de coulée en continu (1) dans une ligne de production ; dans lequel le dispositif (2) présente un mécanisme à ultrasons (3) au moyen duquel on peut vérifier sans contact les caractéristiques du produit de coulée (1) ; dans lequel, au moyen de la vérification par la technique à ultrasons, des défauts internes éventuels du produit de coulée (1), en particulier sous la forme de retassures, de pores, de ségrégations, de fissures internes ou d'inclusions non métalliques, peuvent être détectés ; dans lequel on prévoit un mécanisme d'évaluation (4) qui communique avec le mécanisme à ultrasons (3) et au moyen duquel les caractéristiques du produit de coulée (1) déterminées au moyen de la vérification par la technique à ultrasons peuvent être analysées ; **caractérisé en ce qu'**on prévoit un dispositif de marquage (8) disposé après le mécanisme à ultrasons (3) dans la direction de coulée (G), au moyen duquel le produit de coulée (1) peut être marqué en fonction d'une caractéristique détectée via la vérification par la technique à ultrasons, et **en ce qu'**un dispositif de coupure (9) est disposé après le dispositif de marquage (8) dans la direction de coulée, qui peut être commandé en fonction des résultats de mesure du mécanisme à ultrasons (3) analysés par le mécanisme d'évaluation (4) ; dans lequel le produit de coulée (1) peut être séparé via le dispositif de coupure (9) ; dans lequel le dispositif présente un mécanisme à ultrasons additionnel (3z) qui est conçu pour vérifier les caractéristiques de pièces séparées (10) du produit de coulée ; et, de préférence, **en ce que** le dispositif présente un deuxième mécanisme de marquage (12) qui est conçu pour marquer les pièces séparées (10) du produit de coulée (1), en fonction de la vérification au moyen du mécanisme à ultrasons additionnel (3z).

8. Dispositif (2) selon la revendication 7, **caractérisé en ce qu'**on prévoit un moniteur (5) au moyen duquel les caractéristiques du produit de coulée (1) analysées par le mécanisme d'évaluation (4) peuvent être représentées sous la forme d'un graphique, de préférence **en ce que** cette représentation sous la forme d'un graphique a lieu d'une manière unidimensionnelle, d'une manière bidimensionnelle et/ou d'une manière tridimensionnelle.

9. Dispositif (2) selon la revendication 7 ou 8, **caractérisé en ce que** le mécanisme à ultrasons (3) peut se déplacer en direction transversale et/ou parallèlement à une direction de coulée (G) du produit de coulée (1), de préférence, **en ce que** le mécanisme à ultrasons (3) peut se déplacer en fonction d'une caractéristique du produit de coulée (1) détectée via l'évaluation par la technique à ultrasons, de manière plus préférée, **en ce que** le mécanisme à ultrasons (3) peut se déplacer parallèlement à la direction de coulée (G) d'une manière stationnaire en surface par rapport à la barre de coulée (1).

10. Dispositif (2) selon l'une quelconque des revendications 7 à 9, **caractérisé en ce que** le mécanisme à ultrasons (3) présente plusieurs capteurs à ultrasons (3a), dans lequel l'évaluation via la technique par ultrasons a lieu dans une voie de mesure ou dans plusieurs voies de mesure.

11. Dispositif (2) selon l'une quelconque des revendications 7 à 10, **caractérisé en ce que** la technique à ultrasons du mécanisme à ultrasons (3) s'appuie sur l'utilisation d'un EMAT, d'un laser-EMAT, d'un laser par ultrasons, d'ultrasons dans l'air et/ou d'ultrasons dans l'air-EMAT.

12. Dispositif (2) selon l'une quelconque des revendications 7 à 11, **caractérisé en ce que** le mécanisme à ultrasons (3) est disposé au-dessus du produit de coulée (1), en dessous du produit de coulée (1) ou de part et d'autre du produit de coulée (1).

13. Installation de coulée continue (100) comprenant :
un dispositif (2) selon l'une quelconque des revendications 7 à 12 pour la mise en oeuvre d'un procédé selon l'une quelconque des revendications 1 à 6 ; et
un dispositif de commande (7) pour le processus de coulée ; dans laquelle on peut commander et/ou on peut régler des paramètres du processus de l'installation de coulée continue (100), en particulier la vitesse de coulée, la vitesse de refroidissement, les paramètres de réduction douce, ou analogues, en fonction des caractéristiques du produit de coulée (1) détectées via l'évaluation par la technique à ultrasons, par le fait que le mécanisme d'évaluation (4) lié au mécanisme à ultrasons (3) communique avec le dispositif de commande (7).

14. Installation de coulée continue (100) selon la revendication 13, **caractérisé en ce que**, au moyen du dispositif de coupure (9) disposé après le dispositif de marquage (8) dans la direction de coulée (G), le produit de coulée (1) peut être séparé en fonction de ses caractéristiques détectées via l'évaluation par la technique à ultrasons en fonction d'une consigne de longueur prédéfinie.
